# EUROPEAN PATENT APPLICATION

(11) **EP 2 003 264 A2**
(43) Date of publication of application: **17.12.2008**
(21) Application number: 08157994.8
(22) Date of filing: 11.06.2008
(51) Int. Cl.: E04F 10/06

(54) **Weather station in an end bar of a motorized awning**

(30) Priority: 11.06.2007 EP 07109994
(71) Applicant: Mado Nederland B.V., 5652 AX Eindhoven (NL)
(72) Inventor: Kiek, Maarten Herman, 3920 Lommel (BE); Vastmans, Jean-Valentin, 3680 Opoeteren (BE)
(74) Representative: Ketelaars, Maarten F.J.M.

(57) **Abstract**

The present invention relates to a retractable and extendable awning, comprising a stationary support member, a movable member and at least one pivotable arm connected between the support and the movable member, a roller arranged at the support member and mounted for rotation, a fabric cloth for winding about and unwinding from the roller and connected to the movable member, wherein the support member is provided with at least an electric motor for driving the roller so as to move the movable member between a retracted and extended position, the electric motor being connected to or integrated with a controller for controlling the motor in response to a control signal received from a weather station arranged inside the movable member, wherein the weather station comprises at least one accelerometer for determining the acceleration of the movable member in two or three directions.

## Description

The present invention relates to a retractable and extendable awning and to a weather station for controlling the same.

Retractable and extendable awnings are generally known. One example of an electrically operated awning is disclosed in the European patent application

EP 1 122 378 A2. The known awning comprises a stationary support member, a movable member and two pivotable arms connected between the support and the movable member, a roller arranged at the support member and mounted for rotation, and a fabric cloth for winding about and unwinding from the roller and connected to the movable member. The support member is provided with an electric motor for driving the roller so as to move the movable member between a retracted and extended position, the electric motor being connected to an indoor controller for controlling the power supply to the motor in response to a control signal received from a weather station arranged at the movable member.

The weather station is provided for the automatic operation of the awning depending on the current weather conditions. The known weather station comprises an ambient light sensor. The ambient light sensor is configured to instruct the controller to extend or retract the awning depending on the current ambient light intensity. The weather station may also carry a wind sensor for sensing the current wind conditions. When the wind conditions are detrimental to the awning in its extended position, for instance when in case of a powerful wind the movable member of the awning threatens to be damaged, the weather sensor causes the awning to retract. In practice, however, the wind speed sensed by the wind sensor has failed to prove a reliable indicator for determining when the movable member should be retracted to avoid damage to the awning.

The weather station may also include a motion sensor and/or a shock sensor. The motion sensor determines movement of the moveable member while the shock sensor determines movement of the movable member that may even go beyond the notice of the motion sensor. The motion/shock sensor is described as a ball switch. This type of switch will be in one condition (open or closed) at rest, while when it is subjected to motion, it will continually change state as long as it remains in motion. The motion and shock sensor will instruct the controller to close, i.e. to retract, the awning when the level of motion and shock exceeds a predetermined maximum threshold value. This threshold value determines the sensitivity of the awning to motion of the movable member. However, the working of the motion and shock sensors depends on the orientation of the motion / shock sensor when arranged in the movable member. The orientation of the sensor depends on the working height at which that awning is attached to the wall of a building since the working height generally determines the angle at which the awning, more specifically the movable member, extends from the building wall. This dependency of the working of the motion sensor on the orientation at which extends in a mounted state, impedes an accurate pre-setting of the sensor sensitivity by the manufacturer since the orientation of the sensor is generally unknown in advance.

Furthermore, the known weather station is mounted on the front of the movable member (front bar) of the awning. The wind sensor takes the form of a resiliently movably mounted wind catching body, while the motion sensor is incorporated into the same wind catching body. Since the weather station projects from the front side of the movable member, the appearance of the awning may be considered rather unappealing. Consequently, a further drawback of the known weather station is that arranging the weather station outside the moveable member makes it vulnerable. In practice damage to the weather station can easily occur.

It is a general object of the present invention to provide an awning and a weather station for an awning wherein the drawbacks of the prior art have been obviated.

It is a further object of the invention to provide an awning and a weather station wherein an improved accuracy of the sensitivity presetting can be achieved.

The known weather station is operated by a solar panel. The solar panel charges, depending on the ambient light conditions, an accumulator, for instance a rechargeable battery. Since the sensors, i.e. for instance the light sensor, motion sensor, shock sensor and wind sensor, and the associated circuitry are operated continuously, the power consumption of the weather station is relatively high. Temporary power requirements may therefore exceed the amount of solar power collected. In other types of awnings non-rechargeable batteries are used. In view of the limited life span of such batteries, replacement of the batteries is to take place frequently, which increases the operational costs of the awning.

It is therefore a further object of the invention to provide an awning and a weather station having a reduced power consumption.

According to a first aspect of the present invention at least one of the objects is achieved by providing a retractable and extendable awning, comprising a stationary support member, a movable member and at least one pivotable arm connected between the support and the movable member, a roller arranged at the support member and mounted for rotation, a fabric cloth for winding about and unwinding from the roller and connected to the movable member, wherein the support member is provided with at least an electric motor for driving the roller so as to move the movable member between a retracted and extended position, the electric motor being connected to or integrated with a controller for controlling the motor in response to a control signal received from a weather station arranged inside the movable member, wherein the weather station comprises at least one accelerometer for determining the acceleration of the movable member in two or three directions.

The accelerometer enables the weather station to determine the extent the awning is caused to move under the influence of the current weather conditions, substantially independently from the orientation in which the sensors are attached to the movable member and the angle at which the movable member, in a mounted state, extends from the building.

In some embodiments the weather station is configured so as to control the motor controller such that the movable member is retracted when the acceleration in one or more directions of the movable member reaches a respective threshold value.

In case of relatively slow movement of the movable member, for instance when the awning is loaded by rainwater causing the moveable member to be gradually moved in downward direction, the detection of the acceleration may become difficult. However, if the weather station were able to determine the angular position of the awning (for instance the inclination of the movable member relative to the floor) and to base the decision on this angular position, the awning will be properly retracted as well when such situation occurs. Consequently, in embodiments of the present invention the weather station alternatively or additionally is configured to determine the angular position of the movable member and to control the motor controller such that the movable member is retracted when the angular position reaches a respective threshold value.

More specifically, in a further embodiment the weather station is configured to determine in a calibration phase a calibration angle of the movable member relative to one or more reference directions (for instance the direction of gravity), and to determine, in an operational phase, the actual angle relative to the reference direction. When the weather station is also able to determine the difference between the calibration angle and the actual angle, it may be configured so as to control the motor controller such that the movable member is retracted when the difference between the calibration angle and actual angle exceeds a respective threshold value.

In a further embodiment the weather station is configured so as to calibrate the at least one accelerometer during movement of the movable member.

In a further preferred embodiment of the present invention the weather station comprises a memory and a transmission unit and is configured so as to send a first control signal from the transmission unit to the motor controller for retracting the movable member when the acceleration in one or more directions of the movable member reaches a respective threshold value.

In a further preferred embodiment the weather station comprises a daylight sensor and is configured to send a second control signal to the motor controller depending on the ambient light intensity sensed by the daylight sensor. When the sensed intensity exceeds a threshold value (or when the sensed light intensity becomes lower than a threshold value), the weather station sends a signal to the motor controller. On receipt the motor controller operates the motor so as to extend (or retract) the awning to its extended (retracted) position.

In a further preferred embodiment the weather station is configured to send a control signal to the motor controller instructing it to retract the movable member when the acceleration threshold is exceeded, irrespective of the sensed value of the daylight intensity in order to protect the awning at any time against adverse weather conditions that could harm the awning.

In a further preferred embodiment of the present invention the awning comprises a proximity detector for sensing the proximity of the stationary support member with regard to the movable member. The proximity detector is preferably connected to or integrated with the weather station, which enables the weather station to be configured to switch off at least one of the accelerometers when the movable member is located close to the stationary support. When the movable member is close to the stationary support, i.e. when the awning is (almost) in a retracted position, the awning is less sensitive to the weather conditions. In this position there is no need for the accelerometers to be energized. The weather station will switch off the accelerometers in order to save energy and to prolong the life span of the batteries.

The proximity detector may be embodied as a contact switch provided on the movable member and the support member. The contact switch causes the weather station to switch off the accelerometers when the movable member is in contact with the support member. This reduces the power consumption of the weather station, which is especially important in case the weather station is battery powered.

The contacts however may become dirty in the course of time. Therefore the contact switch may not function properly anymore. In a further preferred embodiment the proximity detector therefore includes a reed switch that is configured to switch on or off when the switch is located within a predetermined distance from a magnet provided in or at the stationary support. No contact between the movable member and the support member is needed in this embodiment and the correct functioning of the switch is safeguarded. The proximity detector may even be concealed inside the movable member and support member, which makes the detector practically invulnerable to weather conditions and provides the awning with a further improved appearance.

To this end the weather station, in a further preferred embodiment of the present invention, is arranged in a removable end cap of the movable member. The end cap is removable to enable easy maintenance of the weather station, for instance when the battery pack of the power supply needs to be replaced.

The transmission unit of the weather station may provide for wireless signal transmission to the controller of the motor operating the awning and, in some embodiments, from the motor controller to the weather station. In a preferred embodiment the transmission of the control signals is accomplished by a radio-transmission system and a radio-frequency transmitting station is provided in the movable member. Other forms of wireless transmissions are however conceivable and these would include infra-red or ultra-sound.

In case of a radio transmission system, the proper transmission of radio-frequency signals from the transmitting station to the receiver in the support member may be troubled by the metal elements present inside the movable member, for instance the aluminium parts of the central portion of the movable member. The influence of the metal elements on the signal transmission may furthermore vary between awnings of different size and composition. Therefore in a further preferred embodiment the weather station is arranged in an end part of the movable member and the movable member comprises a metal plate arranged so as to form a electromagnetic shield between the end part and the remaining part, i.e. the central portion, of the movable member. Due to the presence of the metal plate of predetermined shape and dimensions, the transmission of the control signals to the motor controller is less influenced by the size and composition of the awning. This enables a standard weather station to be used for a wide variety of different type of awnings.

In a further preferred embodiment of the present invention the weather station includes a housing that is essentially symmetrical about at least one axis of symmetry. The symmetry of the housing enables the weather station to be mounted in opposite orientations with respect to the movable member while keeping the functionality of the unit. The same weather station may therefore be mounted at or in either of the opposite end parts of the movable member, for instance by attaching the back side of the weather station to either of the metal plates mentioned above. Since use can be made of one single type of weather station, the costs of production and storage of the awning may be reduced.

In a particularly preferred embodiment of the present invention the weather station includes a housing made of transparent plastic material. The electronic components of the weather station, i.e. at least a transmission unit, proximity sensor, and/or one or more accelerometers provided on one or more printed circuit boards (PCB's), are arranged inside the housing. The housing is then filled with filler material wherein the electronic components become submerged. Finally the filler material is cured. The electronic components remain surrounded by the filler material, which provides a good protection of the components against shock, moisture, etc. The filler material includes in a preferred embodiment polyurethane, but other suitable materials are also conceivable. In order to prevent any damage to some of the electronic components on the printed circuit board caused by filler material directly contacting the components, foam material may be arranged between these electronic components and the filler material. The foam material prevents direct contact of the filler material with the electronic components.

The daylight sensor may be arranged inside the housing as well, although in other embodiments the daylight sensor is external to the housing

In the embodiment wherein the weather station is provided with a daylight sensor, an optical filter is normally placed in front of the sensor to filter the daylight before reaching the optical sensor. The filter is needed to reduce the intensity of the light before it impinges on the daylight sensor. The filter should therefore be configured to pass (a relevant part of) the visible light spectrum only. According to a further preferred embodiment the function of filtering the incoming light is performed by the filler material surrounding the daylight sensor. To the filler material a colouring agent is added. The mixture of filler material and colouring agent has a colour to filter the incoming light. In a preferred embodiment the colouring agent is ink, more specifically a carbonaceous substance called "black pigment".

According to another aspect of the invention a weather station for a retractable and extendable awning is provided, the awning comprising a stationary support member, a movable member and at least one pivotable arm connected between the support and the movable member, a roller arranged at the support member and mounted for rotation, a fabric cloth for winding about and unwinding from the roller and connected to the movable member, wherein the support member is provided with at least an electric motor for driving the roller so as to move the movable member between a retracted and extended position, the electric motor being connected to or integrated with a controller for controlling the motor in response to a control signal, wherein the weather station comprises at least one accelerometer for determining the acceleration of the movable member in two or three directions adapted and wherein the weather station is configured so as to be arranged inside the movable member and to send the control signal to the motor controller when the acceleration exceeds a predetermined acceleration value.

Further advantages, characteristics and details of the present invention will become apparent from the following description of preferred embodiments of the invention. Reference is made to the annexed drawings, that show:
- figure 1 a partly cut-away perspective view of a first preferred embodiment of a retractable and extendable awning according to the present invention, in an extended position;
- figure 2 an exploded vie w of the first embodiment of an awning according to the invention;
- figure 3 a side elevation view of a preferred embodiment of a weather station according to the present invention;
- figure 4 a bottom view of the weather station of figure 3;
- figure 5 a schematic view in perspective of the electronic components on the two PCB's inside the housing shown in figures 4 and 5; and
- figure 6 a schematic view elucidating a further embodiment of the present invention.

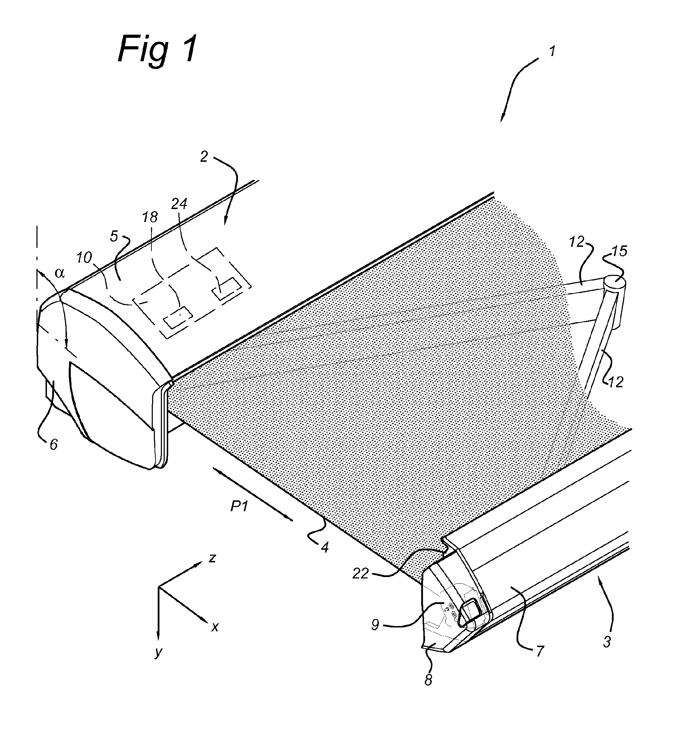

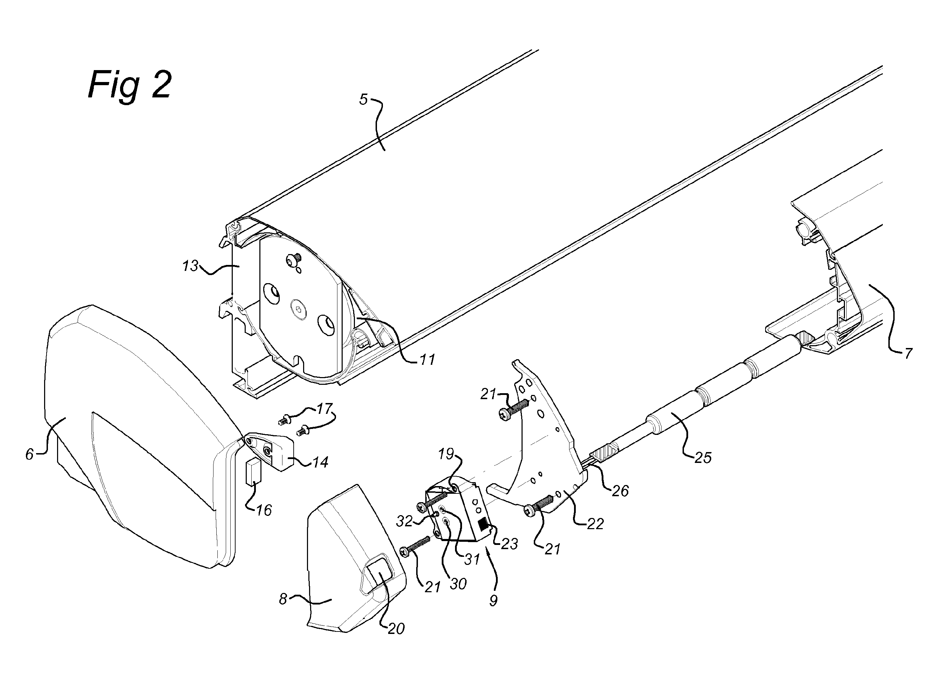

In the figures corresponding parts in different embodiments are referred to by corresponding reference signs. Figure 1 shows a retractable and extendable awning 1 according to an embodiment of the present invention. The awning 1 comprises a stationary support member 2 including a wall mount cassette 5 that can be attached to a wall of a building (not shown). The wall mount cassette 5 houses a roller 11 (figure 2) on which a fabric cloth 4 is wound. The roller is driven by an electric motor 10 (schematically shown), arranged inside the roller 11 and attached to the wall mount cassette 5. The ends of the wall mount cassette 5 are closed by respective end caps 6.

The fabric cloth 4 extends from the roller 11 to a movable member, also called a front bar 3, a front edge of the fabric cloth 4 being connected to the front bar 3. The movable front bar 3 is supported by two collapsible articulate arms 12 (one of which is shown in figure 1). Each of the collapsible arms 12 is hingeably attached to the wall mount cassette 5 and to the front bar 3 and comprises arm sections hingeably joined by a central pivot swivel 15. When the electric motor drives the roller 11 so that the fabric cloth 4 is unwound from the roller 11, the front bar 3 will move forward from its retracted position to an extended position, while when the fabric cloth 4 is wound upon the roller 11, the front bar 3 will move backward from its extended to the retracted position (direction P₁, figure 1).

The electric motor 10 driving the roller 11 is provided with an intelligent motor controller 18 (shown schematically). The motor controller 18 is configured to receive command signals from a remote control (not shown) through a wired and/or wireless communication channel. The motor controller is able to receive command signals from a weather station 9 that is housed inside the movable front bar 3. Although a wired communication channel between the weather station 9 and the motor controller is conceivable, in the preferred embodiment the communication is achieved wirelessly. To this end the weather station 9 comprises a radio transmitter for sending command signals to a receiver 24 connected to or integrated with the motor controller. Based on the command signals received from the remote control and from the weather station 9, the motor controller 18 determines whether any action should be taken and the awning should be retracted or extended.

The movable front bar 3 is composed of the central section, in the preferred embodiment formed by an elongated central part 7, made of aluminium parts, and end caps 8 closing the end portions of the central section, as is shown in figure 2. At the ends of the central section metal plates 22 are provided in order to give the elongated central part 7 the required structural strength. A metal plate also has a further function, namely to form an electromagnetic shield between the end part wherein the weather station is placed and the central part 7 of the front bar. The interaction of the antenna of the transmitter of the weather station and the metal plate 22 provides a suitable directivity characteristic of the transmitter and also the transmission of the control signals to the motor controller is less influenced by the size and composition of the central part 7 of the front bar 3.

Inside the central part 7 a battery pack 25 is arranged. In the shown embodiment the battery pack comprises several lithium batteries in a watertight sealing. Battery pack 25 is connected via wires 26 of the weather station 9 and provides electric power to the weather station.

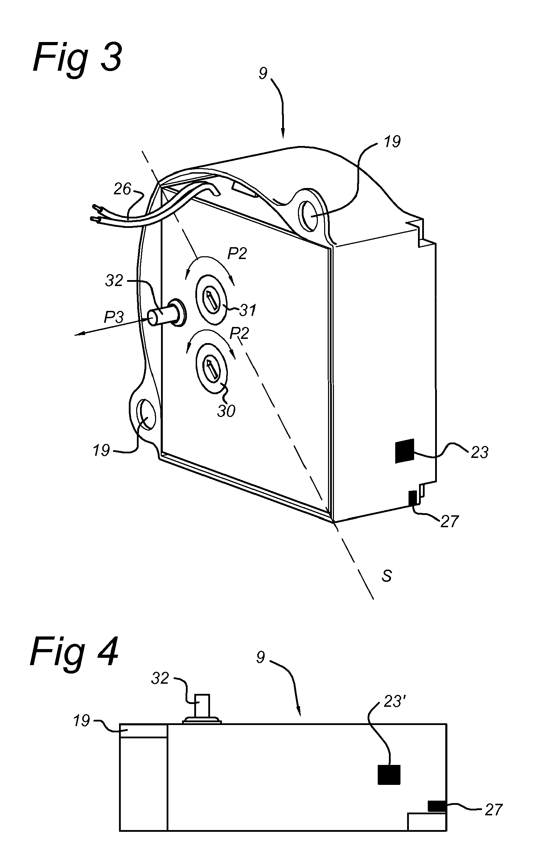

The weather station 9 comprises a housing 33 (shown in figure 3) made of darkly-coloured transparent plastic filler material in which several electronic components on two printed circuit boards are placed. The housing 33 has two lips 19 wherein screws 21 can be arranged in order to mount the housing 33 to the end plate 22. When mounted the weather station 9 is protected by the end cap 8 that is removably connected to the central section of the movable member 3. The end cap 8 has a transparent window 20 to allow ambient light to reach a daylight sensor 27 arranged inside the housing 33 (in figures 2 and 3 arranged close to the lower right corner of the housing).

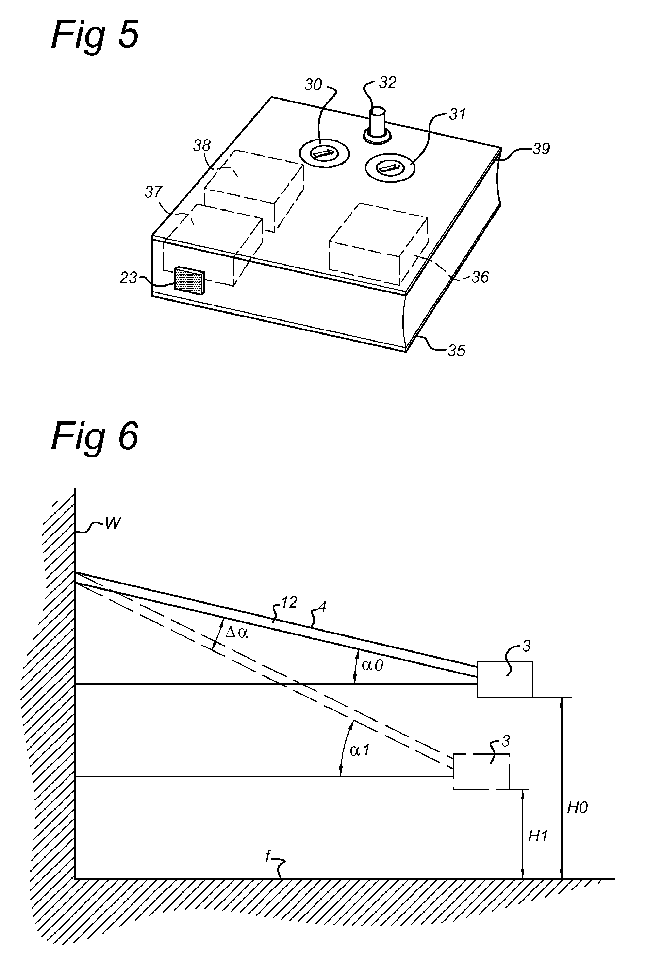

The weather station 9 comprises a control unit, for instance a programmable microcontroller 37, provided on a first printed circuit board 35. The microcontroller is connected to the power supply formed by the battery pack 25 and to a radio transmitter 38, the antenna of which is incorporated in a second printed circuit board 39, extending parallel to the first circuit board, as shown in figure 5. The microcontroller is configured to send command signals to the motor controller whenever needed, as will be explained hereafter.

In the shown embodiment the microcontroller 37 of the weather station 9 is connected to a daylight sensor 27. Daylight sensor 27 is arranged close the wall of transparent material of the housing 33, but sufficiently far inside the housing to enable the filler material to filter the daylight arriving via the window 20 in the end cap 8. Depending on the sensed day light intensity and an intensity threshold value preset in the microcontroller, the microcontroller 37 may decide to send a command signal to the motor controller 18 in order to instruct the motor controller to extend the awning when the sensed intensity is larger than a threshold value and to retract the awning when the sensed light intensity is lower than a threshold value.

Microcontroller 37 is also connected to one or more accelerometers 36. In the present embodiment one single 3D accelerometer is employed, although one 2D accelerometer or more than one (1D, 2D or 3D) accelerometer may be employed in different embodiments of the present invention. The accelerometer 36 determines the current accelerations in the respective directions of the weather station 9 and therefore the acceleration of the movable front bar 3 and sends a signal representative of the current acceleration in the respective directions to the microcontroller 37. The microcontroller 37 determines the acceleration from the received signal and compares it with one or more maximum acceleration threshold values determined by the microcontroller 37. The thresholds may be set by one or more sensitivity setting members, such as potentiometers 30,31 or similar devices. If a measured value of the acceleration in a certain direction exceeds the associated threshold value, the microcontroller 37 sends a command signal to the motor controller. The motor controller then decides whether the awning is to be retracted and operates the roller accordingly. In other embodiments the microcontroller comprises a memory in which the threshold values are stored. The microcontroller then compares the values of the signals from the sensors with the threshold values previously stored in memory and sends a command signal if at least one of the threshold values is reached.

The accelerometer is preferably oriented in such a way, that it determines the respective accelerations in the X,Y,Z-directions shown in figure 1. However, other orientations are also conceivable. When for instance, in another embodiment, a 2D-accelerometer is employed, the acceleration in the X- and Y-direction, that is in the direction of the motion of the front bar moving between the extended and retracted position and in the upward / downward direction respectively, is measured, while no measurement of the acceleration in the lateral (Z) direction takes place since the awning is less vulnerable to lateral movements of the front bar.

The support member 2 may be mounted to a building at various working heights, as discussed earlier. Since the working height influences the angle (α) (cf. figure 1) at which the articulate arms 12 and the movable front bar 3 extend from the building wall, the angle (α) may vary depending on the actual situation. Therefore the microcontroller 37 of the weather station 9 is configured to calibrate the accelerometer(s) 36 before the comparison with the preset threshold values is performed. The microcontroller may for instance calibrate the accelerometer during a preset time interval (several seconds) each time the awning is extended or has just extended from the retracted position. After calibration a suitable comparison with the threshold values can be performed.

For instance, in certain embodiments the microcontroller and the accelerometer(s) may determine the direction of gravity (and preferably the value of the measured gravitational acceleration in this direction) relative to the awning, more specifically the movable member thereof (for instance the front bar 3) once the awning has been extended. The direction, which may be represented by a vector, may be recorded in memory in terms of the projection thereof on a set of orthogonal axes (for instance the X-, Y- and Z-axis).

After having detected the direction of gravity, the microcontroller may iteratively determine the actual acceleration of the movable member, for instance in the same direction of gravity, and compare the determined acceleration with a threshold acceleration value. In a further embodiment the acceleration in the direction of gravity is decomposed into accelerations in a plurality of orthogonal (X,Y,Z) directions and each of the decomposed accelerations is compared to a corresponding threshold acceleration value. The threshold acceleration value may be determined on basis of the detected value of the gravitational acceleration and/or have a preset value.

In some embodiments the microcontroller determines the acceleration of the movements of the moveable member and compares the measured acceleration with one or more threshold values. In other embodiments the microcontroller determines the angle of the movable member relative to a plane. More specifically, the microcontroller may determine the change of the angular position of the movable member relative to an initial angular position. For instance, after the movable member has been moved from the closed position to the extended position, in a calibration phase, the angle of the movable member relative to a reference direction (reference vector or plane), for example the inclination of the moveable member relative to the floor or the angle between the movable member and the direction of the gravity, is determined. A value representative of the calibration angle is stored in the memory. The calibration phase may last for a certain time interval, for instance 1 minute, and the angle determined is the average angle in this time interval. This angle is also referred to as the calibration angle.

In another embodiment the calibration phase is performed before the awning is extended, i.e. when the movable member (cf. front bar 3) is still in its original position. In this embodiment use is made of the fact that generally there is a fixed relation between the angle of the movable member in its original, retracted position and the angle in the fully extended position.

Next, the microcontroller determines on a regular basis (that is iteratively, for instance a couple of times per second) the angular position of the movable member relative to the calibration position. It calculates the difference between the calibration angle stored in memory and the actual angle. When the difference exceeds a threshold, the microcontroller may decide to retract the movable member again. As long as the difference between the actual angle and the calibration angle remains smaller than a threshold value, the microcontroller keeps the awning in the extended position. Again, the threshold may be preset threshold or may be set by the user. For instance, the threshold may be set to 4 degrees, meaning that microcontroller will have the awning retracted once it is loaded (for instance by water present on the cloth between the stationary and movable member) to such an extent, that the inclination of the movable arm(s) connected to the movable member relative to the floor changes by an amount of 4 degrees or more.

In figure 6 an example of an embodiment is given wherein the weather station determines the angle of the pivotable arm(s) 12 and the movable member (front bar 3) relative to the floor (horizontal direction). In the unloaded situation the movable member 3 is situated at a height H₀ (for instance 1174 mm) and it has an inclination α₀ (for instance about 9,4 degrees) relative to the floor (f). As a result of loading of the awning, for instance by the weight of rain water on the fabric cloth, the pivotable arm(s) 12 and the movable member 3 are forced in downward direction. In figure 6 is shown that in a loaded situation the movable member 3 may be situated at a height H₁ (for instance 1027 mm). It then has an inclination α₁ relative to the floor (f). The difference between the inclination α₀ of the awning in unloaded situation and the inclination α₁ of the awning in a loaded situation, also referred to as Δα (which in this example is about 3,4 degrees), should not become larger than a certain threshold value in order to avoid any damage the awning. Tests have shown that for typical awnings the angle Δα generally should not exceed about 4-10 degrees in order to avoid any damage to the construction. In this case the threshold value for Δα should be set to 4 degrees or less.

The sensitivity of the response of the microcontroller 37 to movement (acceleration or varying inclination) of the movable front bar 3 can be adjusted by operating a sensitivity setting member, such as by turning (direction P₂) a button 30 of a potentiometer provided on either of the PCB's. Operating the sensitivity member causes the associated threshold value to increase or decrease and to set the microcontroller 37 accordingly.

The microcontroller 37 is furthermore connected to a reed switch. A typical reed switch comprises of a pair of contacts on ferrous metal reeds in a hermetically sealed glass envelope. The contacts may be normally open, closing when a magnetic field is present, or normally closed and opening when a magnetic field is applied. The magnetic field is applied by a permanent magnet 16 inside a magnet holder 14. Magnet holder 14 is secured (using screws 17, as is shown in figure 2) to end cap 6 of the stationary support member 2. When the movable front bar 3 and therefore the reed switch in the weather station 9 is close to the support member 2 and therefore close to the magnet 16, the magnetic field generated by the magnet 16 causes the reed switch to open (or close). The microcontroller detects the opening and closing of the reed switch and may respond to the detection by switching on or off certain other electronic components in the weather station. When for instance the movable front bar 3 is close to the stationary support member 2, the front bar 3 will be less vulnerable to the wind conditions. Measurement of the influence of the wind on the front bar 3 is therefore in this situation not needed anymore. The microcontroller then decides to switch off the accelerometer(s) used to determine the movement of the front bar 3. Switching off the accelerometer(s) when the awning is in its retracted position saves energy and prolongs the life time of the battery pack 25. When the awning is extended and the distance between the support member 2 and the movable front bar 3 exceeds a predetermined value (in practice in the range of 0 to 5 cm, preferably from 1 to 3 cm, depending on the size of the awning), the reed switch switches again, upon which the microcontroller switches the accelerometer(s) on.

Inside the housing a pair of light emitting diodes (LED) 23,23' is arranged. The LED's 23,23' are arranged at substantially equal distances from the plane of symmetry (S) (cf. figure 3) so that in either of the two orientations of the weather station 9, i.e. the orientation shown in figure 3 and the opposite orientation shown in figure 4, an LED 23,23' is positioned at the same position directly behind the window 20 in the end cap 8. Therefore only one type of weather station 9 needs to be manufactured.

Preferably, as described above, the weather station 9 is separate from the motor controller but, if desired, the motor controller could be incorporated in the weather station 9 at the front bar 3.

The present invention is not limited to the above described embodiments thereof. The rights applied for are defined by the following claims.

## Claims

1. Retractable and extendable awning, comprising a stationary support member, a movable member and at least one pivotable arm connected between the support and the movable member, a roller arranged at the support member and mounted for rotation, a fabric cloth for winding about and unwinding from the roller and connected to the movable member, wherein the support member is provided with at least an electric motor for driving the roller so as to move the movable member between a retracted and extended position, the electric motor being connected to or integrated with a controller for controlling the motor in response to a control signal received from a weather station arranged inside the movable member, wherein the weather station comprises at least one accelerometer for determining the acceleration of the movable member in two or three directions.

2. Awning as claimed in claim 1, wherein the weather station is configured so as to control the motor controller such that the movable member is retracted when the acceleration in one or more directions of the movable member reaches a respective threshold value.

3. Awning as claimed in claim 1, wherein the weather station is configured so as to determine the angular position of the movable member and to control the motor controller such that the movable member is retracted when the angular position reaches a respective threshold value.

4. Awning as claimed in any of the preceding claims, wherein the weather station is configured to determine in a calibration phase a calibration angle of the movable member relative to one or more reference directions, and to determine in an operational phase the actual angle relative the reference directions and the difference between the calibration angle and actual angle, and wherein the weather station is configured so as to control the motor controller such that the movable member is retracted when the difference between the calibration angle and actual angle exceeds a respective threshold value.

5. Awning as claimed in any of the preceding claims, wherein the weather station is configured so as to send a first control signal from the transmission unit to the motor controller so as to retract the movable member when the acceleration in one or more directions or the angle with respect to one or more reference directions reaches a respective threshold value.

6. Awning as claimed in any of the preceding claims, wherein the weather station also comprises a daylight sensor and is configured to as to send a second control signal to the motor controller depending on the ambient light intensity sensed by the daylight sensor.

7. Awning as claimed in claim 6, wherein the weather station is configured to send a control signal to the motor controller when the sensed light intensity reaches a threshold value.

8. Awning as claimed in claims 5 and 7, wherein the weather station is configured to send a control signal to the motor controller instructing to retract the movable member when the acceleration threshold is exceeded, irrespective of the sensed value of the daylight intensity.

9. Awning as claimed in any of the preceding claims, comprising a proximity detector for sensing the proximity of the stationary support member with regard to the movable member, the proximity detector being connected to or integrated with the weather station.

10. Awning as claimed in claim 9, wherein the weather station is configured to switch off at least one of the accelerometers, preferably all accelerometers, when the proximity detector senses that the movable member is located within a predetermined distance from the stationary support.

11. Awning as claimed in any of the preceding claims, wherein the weather station is arranged in a removable end cap of the movable member.

12. Awning as claimed in any of the preceding claims, wherein the weather station is arranged in an end part of the movable member and wherein the movable member comprises a metal plate arranged so as to form a electromagnetic shield between the end part and the remaining part of the movable member.

13. Awning as claimed in any of the preceding claims, wherein the weather station includes a housing, preferably made of transparent plastic material, wherein electronic components including at least one of the memory, transmission unit, proximity sensor, daylight sensor and/or the accelerometers are arranged, the housing having been filled with filler material wherein the electronic components have been submerged.

14. Awning as claimed in claim 13, wherein foam material is arranged between at least some of the electronic components and the filler material.

15. Awning as claimed in any of the preceding claims, comprising threshold setting means for manually setting one or more of the threshold values stored in memory.

16. Awning as claimed in claim 15, wherein the threshold setting means comprise a first potentiometer for setting the daylight intensity threshold and a second potentiometer for setting the acceleration or angle threshold.
